# EUROPEAN PATENT SPECIFICATION

(11) **EP 4 588 599 B1**
(45) Date of publication and mention of the grant of the patent: **04.11.2026**
(21) Application number: 25150051.8
(22) Date of filing: 02.01.2025
(51) Int. Cl.: B23K 9/025, B23K 9/028, B23K 9/12, B23K 37/02, B23K 9/02

(54) **MECHANIZED AND COORDINATED MOTION FOR FILLET AND GROOVE WELDING**
MECHANISIERTE UND KOORDINIERTE BEWEGUNG ZUM KEHL- UND RILLENSCHWEISSEN
MOUVEMENT MÉCANISÉ ET COORDONNÉ POUR SOUDAGE DE FILETAGE ET DE RAINURE

(30) Priority: 03.01.2024 US 202463617099 P; 08.05.2024 US 202418658194
(43) Date of publication of application: 23.07.2025
(73) Proprietor: Lincoln Global, Inc., Cleveland, OH 44117 (US)
(72) Inventor: EDWARDS, James E., San Diego, 92106 (US); HAWKES, Larry B., San Diego, 92109 (US); CALUGAR, Justin, San Diego, 92110 (US)
(74) Representative: Hoyng Rokh Monegier B.V.

(56) References cited:
- US-B2- 9 375 812
- US-B2- 9 969 025

## Description

### FIELD

Embodiments of the present invention relate to motion control of a welding torch during a welding process. More specifically, embodiments of the present invention relate to motion control of a welding torch during a welding process along two independent axes of motion.

### BACKGROUND

Many coordinated motion systems for welding include the use of a six-axis industrial robot combined with a rotational positioner. Six-axis robots have the ability to oscillate the welding torch in any plane, where the coordination is between the torch path and the addition of part manipulation. Traditionally, mechanized orbital welding consists of three axes of motion control, being that of travel, height, and oscillation. The physical orientation of the two mechanical systems controlling height and oscillation limits welding in the plane normal to the height and oscillation axes. It is often necessary to angle the welding torch to achieve proper weld bead placement. Such an angle is known as the work angle. It is desirable to maintain oscillation across the face of the weld and height control perpendicular to the oscillation. In existing welding systems (see US 9 969 025 B2), this is done by physically reorienting the motion axes. This can result in complex mechanical systems with a number of size and reliability disadvantages.

### SUMMARY

Embodiments of the present invention include systems and methods to support mechanized welding such as, for example, orbital welding of pipe. In one embodiment, software coordinated motion of two independent axes of motion is provided to adjust the plane of oscillation of a welding torch and the height of the welding torch with respect to a workpiece to account for the torch angle. This allows for a limitless adjustment of the motion plane within the bounds of the two-axis system. For example, one embodiment is a mechanized welding system. The system includes a welding torch and a two-axis motion apparatus operatively connected to the welding torch and configured to move the welding torch in two independent axes of motion (e.g., X and Y) during an orbital welding procedure to produce at least one of a fillet weld or a groove weld on a workpiece. The system also includes a motion controller operatively connected to the two-axis motion apparatus. The motion controller is configured to control movement of the two-axis motion apparatus along the two axes of motion in a coordinated manner to continuously and simultaneously adjust the welding torch in a height direction and an oscillation direction with respect to the workpiece, while accounting for a physical work angle of the welding torch with respect to the workpiece, and without the two-axis motion apparatus having to be tilted with respect to the workpiece when the physical work angle is changed.

In one embodiment, a mechanized welding system is provided. In one embodiment a mechanized welding system according to claim 1 is provided. In an embodiment, the mechanized welding system includes a welding torch and a two-axis motion apparatus operatively connected to the welding torch and configured to move the welding torch in two independent axes of motion (e.g., X and Y) during an orbital welding procedure to produce a weld on a cylindrical pipe workpiece. The mechanized welding system also includes a motion controller operatively connected to the two-axis motion apparatus and an orbital track configured to fit around the cylindrical pipe workpiece. The mechanized welding system further includes a motorized orbital welding head having a tractor assembly. The motorized orbital welding head is configured to be operatively connected to the orbital track via the tractor assembly to move along the orbital track. The motion controller is configured to control movement of the two-axis motion apparatus along the two axes of motion in a coordinated manner to continuously and simultaneously adjust the welding torch in a height direction and an oscillation direction with respect to the cylindrical pipe workpiece, while accounting for a physical work angle of the welding torch with respect to the cylindrical pipe workpiece, and without the two-axis motion apparatus having to be tilted with respect to the cylindrical pipe workpiece when the physical work angle is changed. The system also includes a welding power source configured to provide welding power to the welding torch and to provide welding torch height adjustment information to the motion controller in real time during the orbital welding procedure. A height adjustment of the welding torch is performed in a direction that is 90 degrees with respect to a plane of oscillation of the welding torch. The system further includes a user interface operatively interfacing to the motion controller to allow a user to input the physical work angle of the welding torch and welding torch oscillation/weaving information. In one embodiment, the motion controller and the two-axis motion apparatus are configured to be operatively connected to the motorized orbital welding head. In one embodiment, at least one of the motion controller and the two-axis motion apparatus is an integral part of the motorized orbital welding head. The system also includes an adjustable torch holder configured to allow a user to change the physical work angle of the welding torch. In one embodiment, the system is configured to produce a fillet weld-on-pipe socket connection during the orbital welding procedure. In one embodiment, the system is configured to produce a pipe-through-plate groove weld during the orbital welding procedure. In one embodiment, the system is configured to produce a pipe-to-plate fillet weld during the orbital welding procedure.

In one embodiment, a mechanized welding system is provided. The mechanized welding system includes a welding torch and a two-axis motion apparatus operatively connected to the welding torch and configured to move the welding torch in two independent axes of motion (e.g., X and Y) during a linear welding procedure to produce a weld on a flat plate workpiece. The system also includes a motion controller operatively connected to the two-axis motion apparatus and a linear track configured to mount onto the flat plate workpiece. The system further includes a motorized linear welding head having a tractor assembly. The motorized linear welding head is configured to be operatively connected to the linear track via the tractor assembly to move along the linear track. The motion controller is configured to control movement of the two-axis motion apparatus along the two axes of motion in a coordinated manner to continuously and simultaneously adjust the welding torch in a height direction and an oscillation direction with respect to the flat plate workpiece, while accounting for a physical work angle of the welding torch with respect to the flat plate workpiece, and without the two-axis motion apparatus having to be tilted with respect to the flat plate workpiece when the physical work angle is changed. The system also includes a welding power source configured to provide welding power to the welding torch and to provide welding torch height adjustment information to the motion controller in real time during the linear welding procedure. In one embodiment, a height adjustment of the welding torch is performed in a direction that is 90 degrees with respect to a plane of oscillation of the welding torch. The system also includes a user interface operatively interfacing to the motion controller to allow a user to input the physical work angle of the welding torch and welding torch oscillation/weaving information. In one embodiment, the motion controller and the two-axis motion apparatus are configured to be operatively connected to the motorized linear welding head. In one embodiment, at least one of the motion controller and the two-axis motion apparatus is an integral part of the motorized linear welding head. The system also includes an adjustable torch holder configured to allow a user to change the physical work angle of the welding torch. In one embodiment, the system is configured to produce a fillet weld on the flat plate workpiece during the linear welding procedure. In one embodiment, the system is configured to produce a groove weld on the flat plate workpiece during the linear welding procedure. In one embodiment, the system is configured to produce a multi-pass fillet weld on the flat plate workpiece during the linear welding procedure based on multiple manual changes of the physical work angle.

Numerous aspects of the general inventive concepts will become readily apparent from the following detailed description of exemplary embodiments and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
FIG. 1 illustrates a system block diagram of one embodiment of a welding system providing two-axis motion for a welding torch;
FIG. 2 illustrates one embodiment of a portion of the system of FIG. 1 as applied to a fillet weld-on-pipe orbital welding application;
FIG. 3 illustrates a configuration that can be avoided with the embodiment of FIG. 1;
FIG. 4 illustrates a block diagram of an example embodiment of a controller that can be used, for example, in the welding system of FIG. 1;
FIG. 5 illustrates one embodiment of a portion of the system of FIG. 1 as applied to a pipe-through-plate groove weld orbital welding application;
FIG. 6 illustrates one embodiment of a portion of the system of FIG. 1 as applied to a pipe-to-plate fillet weld orbital welding application;
FIG. 7A illustrates a first view of one embodiment of a portion of the system of FIG. 1 as applied to a fillet weld-on-flat-plate linear welding application; and
FIG. 7B illustrates a second view of the embodiment of FIG. 7A.

### DETAILED DESCRIPTION

Embodiments of systems and methods providing mechanized coordinated motion for fillet and groove welding for certain types of welding applications are disclosed. These systems and methods are simpler, more efficient, and more cost effective than more traditional systems and methods (e.g., six-axis robotic systems). The system and methods described herein may be used, for example, for welding two pipes together, for welding a flat plate onto an end of a pipe, for welding long straight tracks along a structural member, or for making a fillet weld between a pipe and a socket connection. Other applications are possible as well.

The examples and figures herein are illustrative only and are not meant to limit the subject invention, which is measured by the scope of the claims. The showings are for the purpose of illustrating exemplary embodiments of the subject invention only and not for the purpose of limiting same.

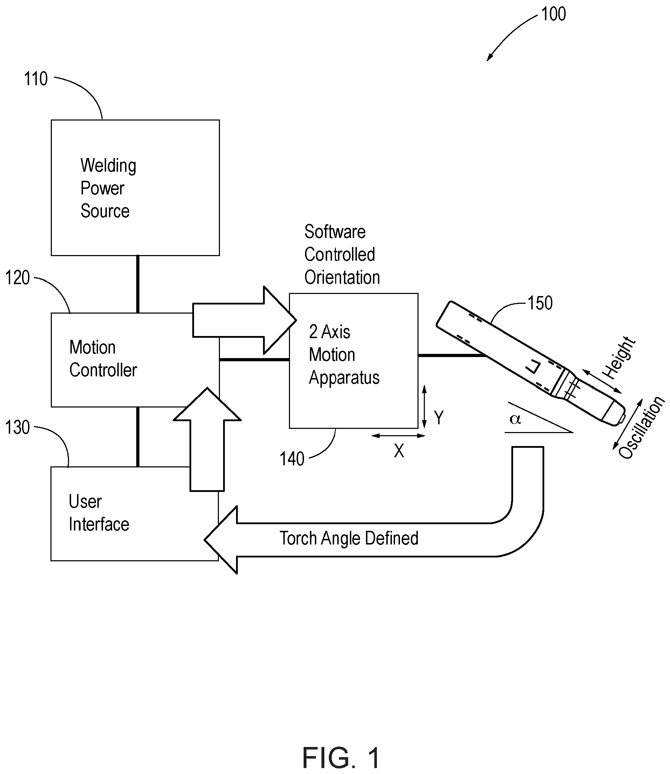

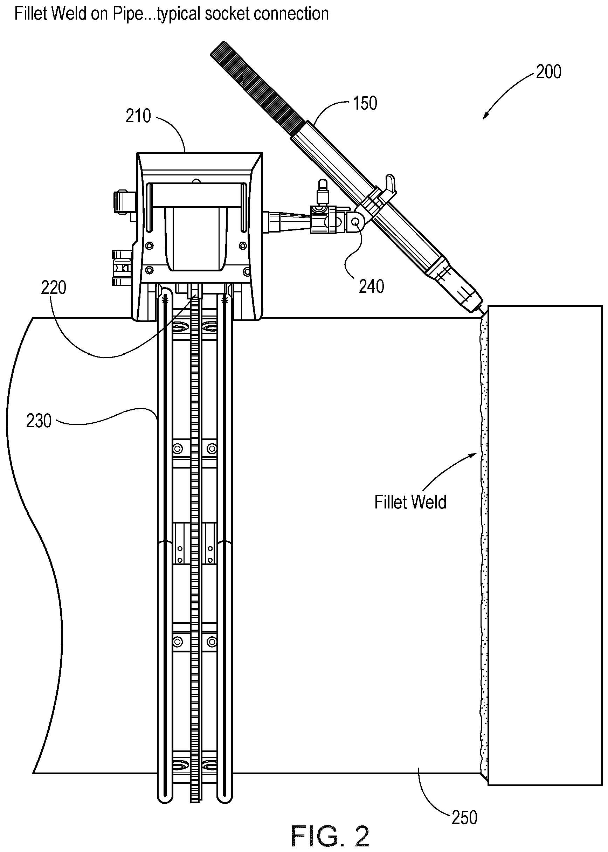

FIG. 1 illustrates a system block diagram of one embodiment of a welding system 100 providing two-axis motion for a welding torch. FIG. 2 illustrates one embodiment of portions of the welding system 100 of FIG. 1 as integrated into an orbital welding system 200, as applied to a fillet weld-on-pipe orbital welding application to form a socket connection. Referring to FIG. 1 and FIG. 2, the system 100 includes a welding power source 110, a motion controller 120, a user interface 130, and a two-axis motion apparatus 140. In one embodiment, the motion controller 120 and the two-axis motion apparatus 140 are parts of a motorized welding head 210 having a tractor assembly 220. The motorized welding head 210 is configured to be operatively connected to a track 230 via the tractor assembly 220 to move along the track 230 in a travel direction (e.g., an orbital travel direction around a pipe).

The motion controller 120 is operatively connected to the welding power source 110, the user interface 130, and the two-axis motion apparatus 140. The system 100 also includes a welding torch 150 operatively connected to the two-axis motion apparatus 140. The two-axis motion apparatus 140 moves along the travel direction, as part of the motorized welding head 210, with the welding torch 150 (e.g., in an orbital welding application around a pipe).

In one embodiment, in addition to providing welding power to the welding torch 150, the welding power source 110 is configured to provide welding torch height adjustment information to the motion controller 120 in real time during a welding procedure (e.g., an orbital welding procedure). The welding power source 110 is also configured to provide welding torch oscillation/weaving information to the motion controller 120 in real time during a welding procedure. The user interface 130 (e.g., a pendant) is configured to allow a user to input a work angle α of the welding torch 150, as manually set by a user, to the motion controller 120. In an alternative embodiment, the user interface 130 provides the welding torch oscillation/weaving information to the motion controller 120 instead of the welding power source 110. The user interface 130 may be a part of or external to the motorized welding head 210, in accordance with various embodiments.

The welding torch 150 is operatively connected to the two-axis motion apparatus 140, for example, via a torch holder. For example, in one embodiment, an adjustable torch holder 240 (see FIG. 2) is provided to allow the user to change the work angle α of the torch 150 relatively easily. The user interface 130 (e.g., a pendant) is used to interface with the motion controller 120 to set up and provide information to the motion controller 120. As the welding torch 150 moves along the track 230 in an orbital welding application, the two-axis motion apparatus 140 moves along with the welding torch 150. However, the two-axis motion apparatus 140 does not have to be tilted in any way to compensate for a change in the work angle α of the welding torch 150 with respect to the workpiece 250 (see FIG. 2). The two-axis motion apparatus 140 is always perpendicular to the workpiece 250 (e.g., a pipe).

In accordance with one embodiment, implementation is accomplished via software-controlled coordination, by the motion controller 120, of two linear motion assemblies of the two-axis motion apparatus 140 operatively connected to the welding torch 150. The user manually sets a desired physical torch angle α (e.g., a work angle of the torch 150). A torch angle measurement can be taken by the user, using common tools or indicators on the torch mounting. The user can input the measured torch angle information into the motion controller 120 via the user interface 130.

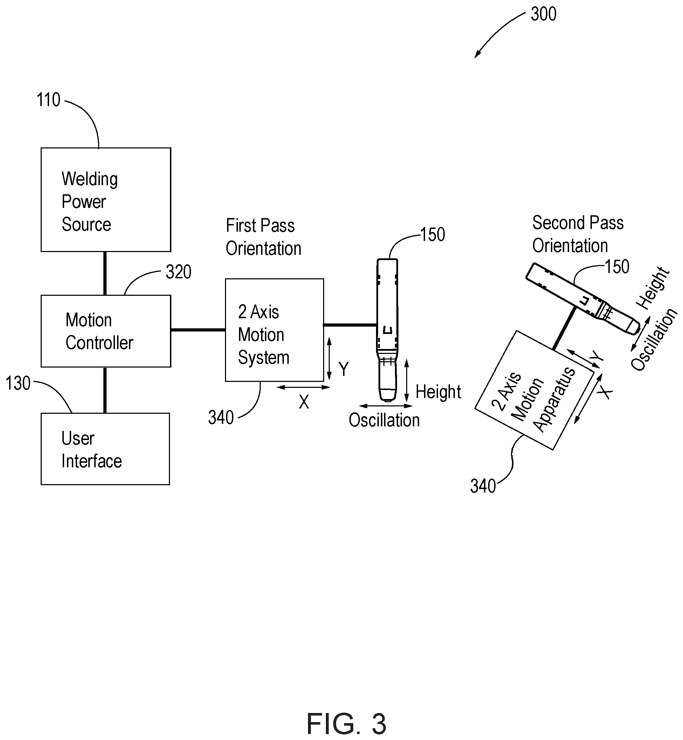

Based on the input torch angle, the system 100 is configured to modify the X and Y positions along the position-based coordinate system (X, Y) of the two-axis motion apparatus 140. This is to affect the torch height and the torch oscillation with respect to the workpiece in real time, even though the height and the oscillation axes are not aligned with the X and Y axes due to the torch angle α (i.e., the two-axis motion apparatus 140 does not have to be tilted to align height and oscillation with X and Y). Instead, the motion controller 120 computes a Cartesian coordinate transformation, allowing the two-axis motion apparatus 140 to remain perpendicular to the pipe, for example. FIG. 3 illustrates a configuration 300 that can be avoided with the embodiment of FIG. 1. In the configuration 300 of FIG. 3, the two-axis motion apparatus 340 needs to be tilted to compensate for a change in the work angle α. The motion controller 320 does not perform a Cartesian coordinate transformation as in the system 100 of FIG. 1. Such a configuration as in FIG. 3 can be more complicated, costly, and inefficient. That is, the embodiment of FIG. 1 is likely superior to the embodiment of FIG. 3 for various applications.

In one embodiment, the system 100 uses two independent position-based servo motors in the two-axis motion apparatus 140. Coordination of the servo motors is handled by the motion controller 120 as commanded by inputs from the welding power source 110 and/or the user interface 130 to the motion controller 120. In an automatic mode, an oscillation width setting and automatic torch height control information (e.g., from the welding power source 110) allow for constant alteration of the target position and speed along each axis (i.e., height and oscillation).

In summary, the welding torch 150 can be manually adjusted to the desired work angle for a given pass and the user can measure the work angle to ensure it is correct. Then the user can enter the work angle into the user interface 130 (e.g., a pendant) to tell the motion controller 120 the work angle. The motion controller 120 takes the work angle information, the desired height information (e.g., input from a height control algorithm in the welding power source 110) and the desired oscillation position information (e.g., input from the welding power source 110) and converts that information into the X and Y position information that the two-axis motion apparatus 140 is to move to in order to achieve the desired height and oscillation positions for the torch 150 with respect to a work piece (e.g. a fillet weld or groove weld on a pipe) at the work angle and at any given time during the welding process. That is, the height and oscillation adjustments are made in real time during the welding process. Again, the motion controller 120 computes a Cartesian coordinate transformation, allowing the two-axis motion apparatus 140 to remain perpendicular to the workpiece.

For example, in one scenario or application, the welding torch 150 is traveling along a track to make a fillet weld. The appropriate motion of the torch 150 when performing a fillet weld is to weave or oscillate across the face of the weld, for example, at a 45 degree work angle. However, if the weld is a multi-pass fillet weld, the work angle α may need to be changed for subsequent passes (e.g., 35, 45, 60 degrees). During any given pass, the welding torch weaves across the face of the weld and the height of the torch adjusts automatically in the direction of the wire. The same two-axis motion apparatus 140, having X, Y orthogonal axes and being under the control of the motion controller 120, is configured to adjust the height of the torch and the oscillation of the torch for any work angle α without having to tilt the two-axis motion apparatus 140 with respect to the work piece (e.g., a pipe). The motion controller 120 computes the X and Y positions required to put the welding torch at the desired height position and the desired oscillation position at any given moment during welding.

In one embodiment, a weld program for a first pass of a multi-pass weld is created which includes weld settings, weave settings, and travel speeds. For any given weld pass, the system 100 is programmed with the desired torch work angle α and tells the user the angle at which to manually set the welding torch 150 via the user interface 130. However, the same weld program that was used for the first pass can be used for the subsequent passes. The motion controller 120 and the two-axis motion apparatus 140 compensate for the different angles used for the different passes.

The two-axis motion apparatus 140 and the motion controller 120 ensure that the height adjustment is done in a direction that is 90 degrees from the plane of oscillation, no matter the value of the work angle α. In accordance with one embodiment, the desired height is determined based on arc voltage and/or current feedback to the welding power source 110, and using an automatic height control algorithm within the welding power source 110. In accordance with an alternative embodiment, the automatic height control algorithm is located within the motion controller 120.

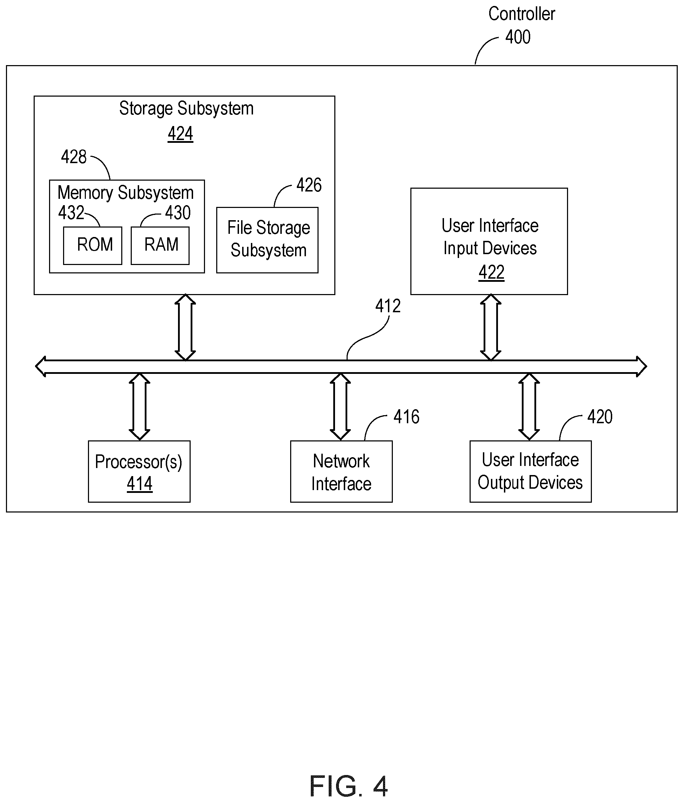

FIG. 4 illustrates a block diagram of an example embodiment of a controller (e.g., the motion controller 120, or a controller within the welding power source 110) that can be used, for example, in the welding system 100 of FIG. 1. Referring to FIG. 4, the controller 400 includes at least one processor 414 (e.g., a microprocessor, a central processing unit, a graphics processing unit) which communicates with a number of peripheral devices via bus subsystem 412. These peripheral devices may include a storage subsystem 424, including, for example, a memory subsystem 428 and a file storage subsystem 426, user interface input devices 422, user interface output devices 420, and a network interface subsystem 416. The input and output devices allow user interaction with the controller 400 (e.g., the user interface 130 may be part of the motion controller 120 as a user interface input device 422). Network interface subsystem 416 provides an interface to outside networks and may be communicatively coupled to corresponding interface devices in other devices.

User interface input devices 422 may include audio input devices such as voice recognition systems, microphones, and/or other types of input devices. In general, use of the term "input device" is intended to include all possible types of devices and ways to input information into the controller 400 or onto a communication network.

User interface output devices 420 may include a display device or non-visual displays such as audio output devices. The display device may include a flat-panel device such as a liquid crystal display (LCD), a projection device, or some other mechanism for creating a visible image. The display device may also provide non-visual display such as via audio output devices. In general, use of the term "output device" is intended to include all possible types of devices and ways to output information from the controller 400 to the user or to another machine or computer system.

Storage subsystem 424 stores programming and data constructs that provide some or all of the functionality described herein. For example, computer-executable instructions and data are generally executed by processor 414 alone or in combination with other processors. Memory 428 used in the storage subsystem 424 can include a number of memories including a main random access memory (RAM) 430 for storage of instructions and data during program execution and a read only memory (ROM) 432 in which fixed instructions are stored. A file storage subsystem 426 can provide persistent storage for program and data files, and may include a solid state drive, a CD-ROM drive, an optical drive, or removable media cartridges. The computer-executable instructions and data implementing the functionality of certain embodiments may be stored by file storage subsystem 426 in the storage subsystem 424, or in other machines accessible by the processor(s) 414.

Bus subsystem 412 provides a mechanism for letting the various components and subsystems of the controller 400 communicate with each other as intended. Although bus subsystem 412 is shown schematically as a single bus, alternative embodiments of the bus subsystem may use multiple buses.

The controller 400 can be of varying types. Due to the ever-changing nature of computing devices and networks, the description of the controller 400 depicted in FIG. 4 is intended only as a specific example for purposes of illustrating some embodiments. Many other configurations of a controller are possible, having more or fewer components than the controller 400 depicted in FIG. 4. For example, the motion controller 120 may not include the user interface devices 420 and 422. Instead, the user interface 130, which is external to the motion controller 120, is provided in the embodiment of FIG. 1.

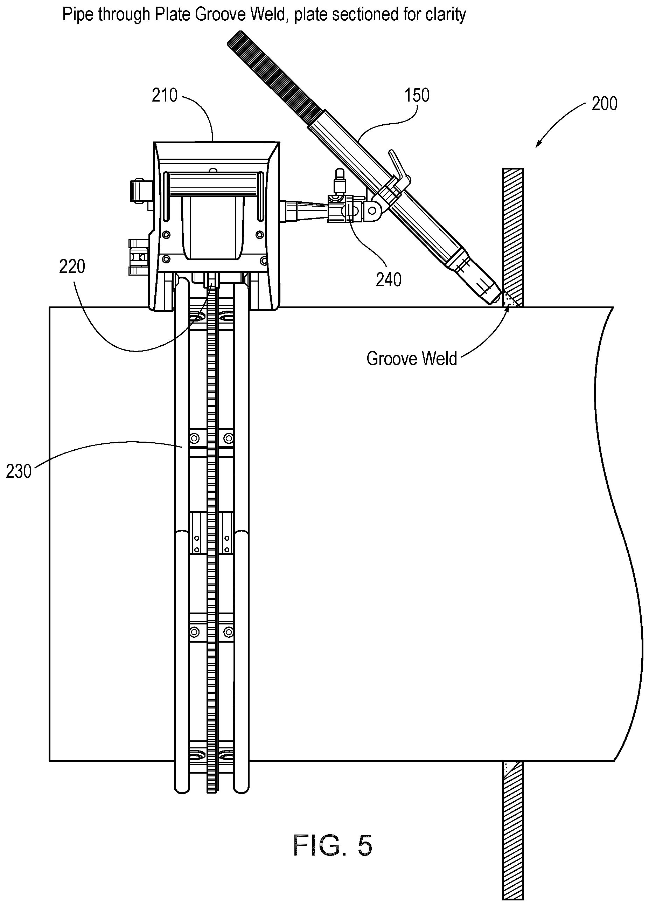

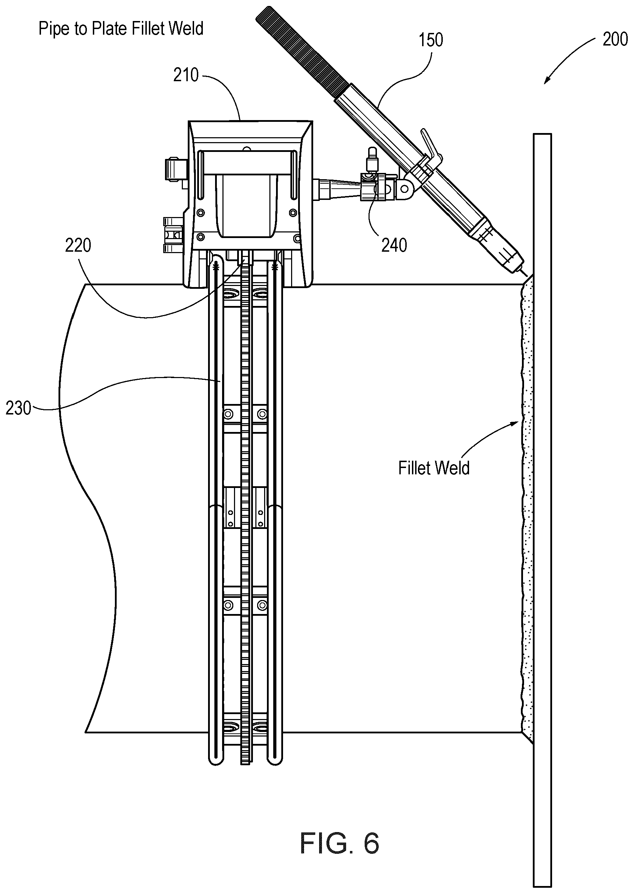

Similarly to FIG. 2, FIG. 5 illustrates one embodiment of a portion of the system 100 of FIG. 1, integrated into the orbital welding system 200, as applied to a pipe-through-plate groove weld orbital welding application. FIG. 6 illustrates one embodiment of a portion of the system 100 of FIG. 1, integrated into the orbital welding system 200, as applied to a pipe-to-plate fillet weld orbital welding application.

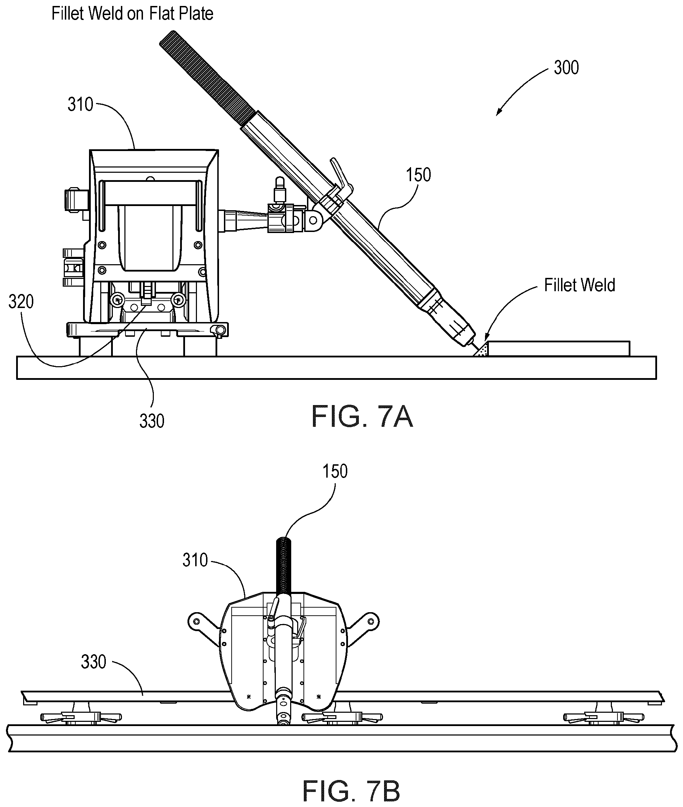

In addition to orbital welding applications, linear welding applications are supported as well. For example, FIG. 7A illustrates a first view (side view) of one embodiment of a portion of the system 100 of FIG. 1, integrated into a linear welding system 300, as applied to a fillet weld-on-flat-plate linear welding application. The system 300 includes a motorized welding head 310 (similar to the motorized welding head 210) having a tractor assembly 320 (similar to the tractor assembly 220). The motorized welding head 310 is configured to be operatively connected to a linear track 330 via the tractor assembly 320 to move along the linear track 330 in a linear travel direction (e.g., a linear travel direction along a flat plate). Again, the motion controller 120 is operatively connected to the welding power source 110, the user interface 130, and the two-axis motion apparatus 140. The system 300 also includes a welding torch 150 operatively connected to the two-axis motion apparatus 140 of the motorized welding head 310. The two-axis motion apparatus 140 moves along the travel direction as part of the motorized welding head 310 with the welding torch 150 (e.g., in a linear welding application along a flat plate). FIG. 7B illustrates a second view (head-on view) of the embodiment of FIG. 7A.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the scope of the general inventive concepts, as defined by the appended claims.

## Claims

1. A mechanized welding system (100), the system comprising:
- a welding torch (150);
- a two-axis motion apparatus (140) operatively connected to the welding torch and configured to move the welding torch in two independent axes of motion during a welding procedure to produce a weld on a workpiece (250);
- a motion controller (120) operatively connected to the two-axis motion apparatus;
- a track (230, 330) configured to fit around the workpiece; and
- a motorized welding head (210,310) having a tractor assembly (220,320), wherein the motorized welding head is configured to be operatively connected to the track via the tractor assembly to move along the track, and
**characterized in that** the motion controller is configured to control movement of the two-axis motion apparatus along the two axes of motion in a coordinated manner to continuously and simultaneously adjust the welding torch in a height direction and an oscillation direction with respect to the workpiece, while accounting for a physical work angle of the welding torch with respect to the workpiece, and without the two-axis motion apparatus having to be tilted with respect to the workpiece when the physical work angle is changed.

2. The system of claim 1, wherein:
- the welding procedure is an orbital welding procedure;
- the workpiece is a cylindrical pipe workpiece;
- the track is an orbital track configured to fit around the cylindrical pipe workpiece; and
- the motorized welding head is a motorized orbital welding head that is configured to be operatively connected to the orbital track via the tractor assembly to move along the orbital track.

3. The system according to claim 2, wherein the system is configured to produce a fillet weld-on-pipe socket connection during the orbital welding procedure.

4. The system according to claims 2 or 3, wherein the system is configured to produce a pipe-through-plate groove weld during the orbital welding procedure.

5. The system according to any of the claims 2-4, wherein the system is configured to produce a pipe-to-plate fillet weld during the welding procedure.

6. The system of claim 1, wherein:
- the welding procedure is a linear welding procedure;
- the workpiece is a flat plate workpiece;
- the track is a linear track configured to fit around the flat plate workpiece; and
- the motorized welding head is a motorized linear welding head that is configured to be operatively connected to the linear track via the tractor assembly to move along the linear track.

7. The system according to claim 6, wherein the system is configured to produce a fillet weld on the flat plate workpiece during the linear welding procedure.

8. The system according to claims 6 or 7, wherein the system is configured to produce a groove weld on the flat plate workpiece during the linear welding procedure.

9. The system according to any of the claims 6 -8 , wherein the system is configured to produce a multi-pass fillet weld on the flat plate workpiece during the linear welding procedure based on multiple manual changes of the physical work angle.

10. The system according to any of the previous claims, further comprising a welding power source configured to provide welding power to the welding torch and to provide welding torch height adjustment information to the motion controller in real time during the welding procedure.

11. The system according to any of the previous claims, wherein a height adjustment of the welding torch is performed in a direction that is 90 degrees with respect to a plane of oscillation of the welding torch.

12. The system according to any of the previous claims, further comprising a user interface operatively interfacing to the motion controller to allow a user to input the physical work angle of the welding torch and oscillation/weaving information.

13. The system according to any of the previous claims, wherein the motion controller and the two-axis motion apparatus are configured to be operatively connected to the motorized welding head.

14. The system according to any of the previous claims, wherein at least one of the motion controller and the two-axis motion apparatus is an integral part of the motorized welding head.

15. The system according to any of the previous claims, further comprising an adjustable torch holder configured to allow a user to change the physical work angle of the welding torch.

## Patentansprüche

1. Mechanisiertes Schweißsystem (100), wobei das System umfasst:
- einen Schweißbrenner (150);
- ein Zweiachsen-Bewegungsgerät (140), das betriebsfähig mit dem Schweißbrenner verbunden ist, und dazu konfiguriert ist, den Schweißbrenner auf zwei unabhängigen Bewegungsachsen während eines Schweißvorgangs zu bewegen, um eine Schweißnaht an einem Werkstück (250) zu erzeugen;
- einen Bewegungscontroller (120), der betriebsfähig mit dem Zweiachsen-Bewegungsgerät verbunden ist;
- eine Bahn (230, 330), die dazu konfiguriert ist, um das Werkstück herum zu passen; und
- einen motorisierten Schweißkopf (210, 310), der eine Zugbaugruppe (220, 320), aufweist, wobei der motorisierte Schweißkopf dazu konfiguriert ist, über die Zugbaugruppe betriebsfähig mit der Bahn verbunden zu sein, um sich entlang der Bahn zu bewegen, und
**dadurch gekennzeichnet, dass** der Bewegungscontroller dazu konfiguriert ist, eine Bewegung des Zweiachsen-Bewegungsgeräts entlang der beiden Bewegungsachsen koordiniert zu steuern, um den Schweißbrenner in einer Höhenrichtung und einer Schwingungsrichtung im Verhältnis zu dem Werkstück durchgehend und gleichzeitig anzupassen, wobei ein räumlicher Arbeitswinkel des Schweißbrenners im Verhältnis zu dem Werkstück berücksichtigt wird, und ohne dass das Zweiachsen-Bewegungsgerät im Verhältnis zu dem Werkstück geneigt werden muss, wenn der physikalische Anstellwinkel geändert wird.

2. System nach Anspruch 1, wobei:
- der Schweißvorgang ein Orbitalschweißvorgang ist;
- das Werkstück zylindrisches Rohrwerkstück ist;
- die Bahn eine Orbitalbahn ist, die dazu konfiguriert ist, um das zylindrische Rohrwerkstück herum zu passen; und
- der motorisierte Schweißkopf motorisierter Orbitalschweißkopf ist, der dazu konfiguriert ist, über die Zugbaugruppe betriebsfähig mit der Orbitalbahn verbunden zu sein, um sich entlang der Orbitalbahn zu bewegen.

3. System nach Anspruch 2, wobei das System dazu konfiguriert ist, eine Kehlaufschweißmuffenverbindung während des Orbitalschweißvorgangs zu erzeugen.

4. System nach Anspruch 2 oder 3, wobei das System dazu konfiguriert ist, eine Rillenschweißnaht eines Rohrs durch eine Platte hindurch während des Orbitalschweißvorgangs zu erzeugen.

5. System nach einem der Ansprüche 2 bis 4, wobei das System dazu konfiguriert ist, eine Kehlschweißnaht eines Rohrs an eine Platte während des Orbitalschweißvorgangs zu erzeugen.

6. System nach Anspruch 1, wobei:
- der Schweißvorgang ein linearer Schweißvorgang ist;
- das Werkstück ein flaches Plattenwerkstück ist;
- die Bahn eine lineare Bahn ist, die dazu konfiguriert ist, um das flache Plattenwerkstück herum zu passen; und
- der motorisierte Schweißkopf ein motorisierter linearer Schweißkopf ist, der dazu konfiguriert ist, über die Zugbaugruppe betriebsfähig mit der linearen Bahn verbunden zu sein, um sich entlang der linearen Bahn zu bewegen.

7. System nach Anspruch 6, wobei das System dazu konfiguriert ist, eine Kehlschweißnaht an dem flachen Plattenwerkstück während des linearen Schweißvorgangs zu erzeugen.

8. System nach Anspruch 6 oder 7, wobei das System dazu konfiguriert ist, eine Rillenschweißnaht an dem flachen Plattenwerkstück während des linearen Schweißvorgangs zu erzeugen.

9. System nach einem der Ansprüche 6 bis 8, wobei das System dazu konfiguriert ist, eine Mehrfach-Kehlschweißnaht an dem flachen Plattenwerkstück während des linearen Schweißvorgangs basierend auf mehreren manuellen Änderungen des physikalischen Anstellwinkels zu erzeugen.

10. System nach einem der vorhergehenden Ansprüche, ferner umfassend eine Schweißstromquelle, die dazu konfiguriert ist, dem Schweißbrenner einen Schweißstrom bereitzustellen und dem Bewegungscontroller in Echtzeit während des Schweißvorgangs Informationen zur Höhenanpassung des Schweißbrenners bereitzustellen.

11. System nach einem der vorhergehenden Ansprüche, wobei eine Höhenanpassung des Schweißbrenners in einer Richtung ausgeführt wird, die im Verhältnis zu einer Schwingungsebene des Schweißbrenners 90 Grad aufweist.

12. System nach einem der vorhergehenden Ansprüche, ferner umfassend eine Benutzerschnittstelle, die betriebsfähig eine Schnittstelle mit dem Bewegungscontroller bildet, um es einem Benutzer zu ermöglichen, den physikalischen Anstellwinkel des Schweißbrenners und Schwingungs-/ Pendelinformationen einzugeben.

13. System nach einem der vorhergehenden Ansprüche, wobei der Bewegungscontroller und das Zweiachsen-Bewegungsgerät dazu konfiguriert sind, mit dem motorisierten Schweißkopf betriebsfähig verbunden zu sein.

14. System nach einem der vorhergehenden Ansprüche, wobei mindestens einer von dem Bewegungscontroller und dem Zweiachsen-Bewegungsgerät integraler Bestandteil des motorisierten Schweißkopfs ist.

15. System nach einem der vorhergehenden Ansprüche, ferner umfassend einen verstellbaren Brennerhalter, der dazu konfiguriert ist, es einem Benutzer zu ermöglichen, den physikalischen Anstellwinkel des Schweißbrenners zu ändern.

## Revendications

1. Système de soudage mécanisé (100), le système comprenant :
- un chalumeau soudeur (150) ;
- un appareil à mouvement sur deux axes (140) connecté de manière opérationnelle au chalumeau soudeur et configuré pour déplacer le chalumeau soudeur sur deux axes de mouvement indépendants pendant une procédure de soudage pour produire une soudure sur une pièce à travailler (250) ;
- un contrôleur de mouvement (120) connecté de manière opérationnelle à l'appareil à mouvement sur deux axes ;
- une piste (230, 330) configurée pour s'appliquer autour de la pièce à travailler ; et
- une tête de soudage motorisée (210, 310) présentant un ensemble de traction (220, 320), la tête de soudage motorisée étant configurée pour être connectée de manière opérationnelle à la piste par l'intermédiaire de l'ensemble de traction pour se déplacer le long de la piste, et
**caractérisé en ce que** le contrôleur de mouvement est configuré pour commander le mouvement de l'appareil à mouvement sur deux axes le long des deux axes de mouvement de manière coordonnée afin d'ajuster en continu et simultanément le chalumeau soudeur dans une direction de la hauteur et une direction de l'oscillation par rapport à la pièce à travailler, tout en tenant compte d'un angle d'attaque physique du chalumeau soudeur par rapport à la pièce à travailler, et sans qu'il soit nécessaire d'incliner l'appareil à mouvement sur deux axes par rapport à la pièce à travailler lorsque l'angle d'attaque physique est modifié.

2. Système selon la revendication 1, dans lequel :
- la procédure de soudage est une procédure de soudage orbital ;
- la pièce à travailler est une pièce à travailler de tuyau cylindrique ;
- la piste est une piste orbitale configurée pour s'appliquer autour de la pièce à travailler de tuyau cylindrique ; et
- la tête de soudage motorisée est une tête de soudage orbital motorisée qui est configurée pour être connectée de manière opérationnelle à la piste orbitale par l'intermédiaire de l'ensemble de traction pour se déplacer le long de la piste orbitale.

3. Système selon la revendication 2, dans lequel le système est configuré pour produire une connexion de manchon pour tuyaux à soudure d'angle pendant la procédure de soudage orbital.

4. Système selon la revendication 2 ou 3, dans lequel le système est configuré pour produire une soudure sur bords droits d'un tuyau traversant une plaque pendant la procédure de soudage orbital.

5. Système selon l'une quelconque des revendications 2 à 4, dans lequel le système est configuré pour produire une soudure sur bords droits d'un tuyau à une plaque pendant la procédure de soudage.

6. Système selon la revendication 1, dans lequel :
- la procédure de soudage est une procédure de soudage linéaire ;
- la pièce à travailler est une pièce à travailler de plaque plate ;
- la piste est une piste linéaire configurée pour s'appliquer autour de la pièce à travailler de plaque plate ; et
- la tête de soudage motorisée est une tête de soudage linéaire motorisée qui est configurée pour être connectée de manière opérationnelle à la piste linéaire par l'intermédiaire de l'ensemble de traction pour se déplacer le long de la piste linéaire.

7. Système selon la revendication 6, dans lequel le système est configuré pour produire une soudure d'angle sur la pièce à travailler de plaque plate pendant la procédure de soudage linéaire.

8. Système selon la revendications 6 ou 7, dans lequel le système est configuré pour produire une soudure sur bords droits sur la pièce à travailler de plaque plate pendant la procédure de soudage linéaire.

9. Système selon l'une quelconque des revendications 6 à 8, dans lequel le système est configuré pour produire une soudure d'angle à passages multiples sur la pièce à travailler de plaque plate pendant la procédure de soudage linéaire sur la base de plusieurs changements manuels de l'angle d'attaque physique.

10. Système selon l'une quelconque des revendications précédentes, comprenant en outre une source de puissance de soudage configurée pour fournir de la puissance de soudage au chalumeau soudeur et pour fournir des informations d'ajustement de hauteur de chalumeau soudeur au contrôleur de mouvement en temps réel pendant la procédure de soudage.

11. Système selon l'une quelconque des revendications précédentes, dans lequel un ajustement de la hauteur du chalumeau soudeur est effectué dans une direction qui est à 90 degrés par rapport à un plan d'oscillation du chalumeau soudeur.

12. Système selon l'une quelconque des revendications précédentes, comprenant en outre une interface utilisateur faisant de manière opérationnelle l'interface avec le contrôleur de mouvement pour permettre à un utilisateur d'entrer l'angle d'attaque physique du chalumeau soudeur et des informations d'oscillation/mouvements alternés.

13. Système selon l'une quelconque des revendications précédentes, dans lequel le contrôleur de mouvement et l'appareil à mouvement sur deux axes sont configurés pour être connectés de manière opérationnelle à la tête de soudage motorisée.

14. Système selon l'une quelconque des revendications précédentes, dans lequel au moins l'un du contrôleur de mouvement et de l'appareil à mouvement sur deux axes fait partie intégrante de la tête de soudage motorisée.

15. Système selon l'une quelconque des revendications précédentes, comprenant en outre un porte-chalumeau ajustable, configuré pour permettre à un utilisateur de modifier l'angle d'attaque physique du chalumeau soudeur.
